(19)

Europäisches
Patentamt
European
Patent Office
Office européen
des brevets

(11) **EP 2 387 243 A2**

(12) **EUROPEAN PATENT APPLICATION**
published in accordance with Art. 153(4) EPC

(43) Date of publication:
**16.11.2011  Bulletin 2011/46**

(51) Int Cl.:
***H04N 13/00*** (2006.01)      ***H04N 7/24*** (2011.01)

(21) Application number: **09837681.7**

(86) International application number:
**PCT/KR2009/007942**

(22) Date of filing: **30.12.2009**

(87) International publication number:
**WO 2010/079921 (15.07.2010 Gazette 2010/28)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.01.2009  US 144125 P
29.01.2009  US 148386 P**

(71) Applicant: **LG Electronics Inc.
Seoul 150-721 (KR)**

(72) Inventors:
• **YANG, Jeong Hyu
Seoul 137-724 (KR)**

• **SUH, Jong Yeul
Seoul 137-724 (KR)**
• **CHOI, Seung Jong
Seoul 137-724 (KR)**
• **IM, Jin Seok
Seoul 137-724 (KR)**
• **LIM, Jung Eun
Seoul 137-724 (KR)**

(74) Representative: **Frenkel, Matthias Alexander
Wuesthoff & Wuesthoff
Patent- und Rechtsanwälte
Schweigerstrasse 2
81541 München (DE)**

(54) **VIDEO SIGNAL PROCESSING METHOD AND APPARATUS USING DEPTH INFORMATION**

(57)    The present invention relates to a video signal processing method, comprising the steps of: receiving a multi-view coded bitstream including a color picture and a depth picture, the depth picture representing a set of numeric information on a distance between an object and a camera serving as a reference; acquiring data type identification information as well as depth range information from the multi-view video coded bitstream, the data type identification information indicating whether the multi-view video coded bitstream contains depth coded data, the depth range information representing information of maximum and minimum values in variances between two pictures at different visual points; according to the data type identification information, if the multi-view video coded bitstream contains the depth coded data, recovering the depth coded data; adjusting the depth range information by comparing the depth range information with a predetermined threshold range for changes of depth; and displaying 3D video by using the recovered depth coded data and the adjusted depth range information.

FIG. 3

**Description**

**TECHNICAL FIELD**

The present invention relates to a technique for processing a video signal.

**BACKGROUND ART**

Compression coding means a series of signal processing techniques for transmitting digitized information via a communication circuit or saving the digitized information in a format suitable for a storage medium. Targets of the compression coding include voice, image, text and the like. In particular, a scheme of performing compression coding having a target set to an image is called video image compression. And, the video image is characterized in having spatial redundancy and temporal redundancy.

**DISCLOSURE OF THE INVENTION**

**TECHNICAL PROBLEM**

An object of the present invention is to raise efficiency of processing a video signal.

**TECHNICAL SOLUTION**

The present invention provides a method and apparatus for implementing a 3D display efficiency using depth information.
The present invention provides a video signal processing method and apparatus for adjusting a depth difference in case of a screen switching or a channel switching.
The present invention defines header informations for processing a depth bitstream including depth picture data, thereby providing a more efficient video signal decoding method and apparatus.
And, the present invention defines a syntax for codec compatibility, thereby raisin compatibility between codecs of different types.

**ADVANTAGEOUS EFFECTS**

Thus, in order to implement a 3-dimensional (3D) display using a stereoscopic 3D image or a multi-view image taken in different directions via a plurality of cameras, the present invention provides a method and apparatus for processing depth information efficiently. As a 3D scene in a virtual view can be synthesized using the depth information, it is able to generate a 3D content in a view of a non-transmitted image.
The present invention is able to minimize a change of a depth generated in case of a screen switching, an abrupt change of an object or a channel switching by means of adjusting depth range information, thereby providing a 3D image causing less visual fatigue to a user.
There present invention predicts motion information using temporal and spatial correlations of video sequences (e.g., video sequences including color pictures, depth pictures or color and depth pictures), thereby raising signal processing efficiency. The present invention predicts coding information of a picture having a high correlation with a current block, thereby enabling precise prediction. If the precise prediction is enabled, a corresponding error value transmission size is reduced to perform an efficient coding. Even if a motion information of a current block is not transmitted, the present invention is able to calculate motion information very similar to that of the current block, thereby improving a recovery rate.
The present invention defines header informations for processing a depth bitstream including depth picture data and checking an inter-view dependency relation in the depth bitstream, thereby improving a coding efficiency.
And, the present invention defines a syntax for codec compatibility, thereby increasing compatibility between codecs of different types.

**DESCRIPTION OF DRAWINGS**

FIG. 1 is a diagram for explaining a concept of a depth according to an embodiment of the present invention.
FIG. 2 is an internal block diagram of a broadcast receiver, to which depth coding is applied, according to an embodiment of the present invention.
FIG. 3 is a schematic block diagram of a video decoder capable of processing depth information according to an embodiment of the present invention.

FIG. 4A shows depth coding information containable in a depth coded bitstream according to an embodiment of the present invention.

FIG. 4B shows a structure of multi-view video coding, to which SEI message information containing depth ranging information applies, according to an embodiment of the present invention.

FIG. 5 is a diagram for explaining a depth coded bitstream structure and a depth coded bitstream transmitting method according to an embodiment of the present invention.

FIG. 6 is a schematic block diagram of a channel switching device of a digital TV using depth information according to an embodiment of the present invention.

FIG. 7 is a schematic block diagram of a post-processing unit 680 for adjusting a depth change according to an embodiment of the present invention.

FIG. 8 shows an example of adjusting a depth change using a pixel shift of left and right video signals according to an embodiment of the present invention.

FIG. 9 shows an example of adjusting a depth change using a pixel shift of left and right video signals according to an embodiment of the present invention.

FIG. 10 shows an example of information for identifying a depth sequence according to an embodiment of the present invention.

## BEST MODE

The present invention provides a method of processing a video signal includes the steps of receiving a multi-view coded bitstream including a color picture and a depth picture, the depth picture representing a set of numeric informations on a distance between an object and a camera serving as a reference, acquiring data type identification information as well as depth range information from the multi-view video coded bitstream, the data type identification information indicating whether the multi-view video coded bitstream contains depth coded data, the depth range information representing information of maximum and minimum values of a disparity difference between two pictures in different views, according to the data type identification information, if the multi-view video coded bitstream contains the depth coded data, recovering the depth coded data, adjusting the depth range information by comparing the depth range information with a predetermined depth change threshold range, and displaying a 3D video by using the recovered depth coded data and the adjusted depth range information.

Preferably, if the depth range information exceeds the predetermined depth change threshold range, the depth range information is adjusted by being multiplied by a scaling factor to have a value within the depth change threshold range.

More preferably, the depth range information is acquired from a supplementary information area.

Preferably, the data type identification information is acquired from an extension region of a depth coded NAL unit.

Preferably, the multi-view video coded bitstream includes the color picture and the depth picture of a base view and a non-base view, wherein the base view indicates a decodable view independently from other views without using inter view prediction, and wherein the non-base view indicates a view different from the base view.

And, the present invention provides an apparatus for processing a video signal including a transport demultiplexing unit acquiring data type identification information as well as depth range information from a multi-view video coded bitstream including a color picture and a depth picture, the depth picture representing a set of numeric informations on a distance between an object and a camera serving as a reference, the data type identification information indicating whether the multi-view video coded bitstream contains depth coded data, a video decoder recovering the depth picture based on the data type identification information, a post-processing unit adjusting the depth range information by comparing the depth range information with a predetermined depth change threshold range, and a display unit displaying a 3D video by using the recovered depth coded data and the adjusted depth range information.

## MODE FOR INVENTION

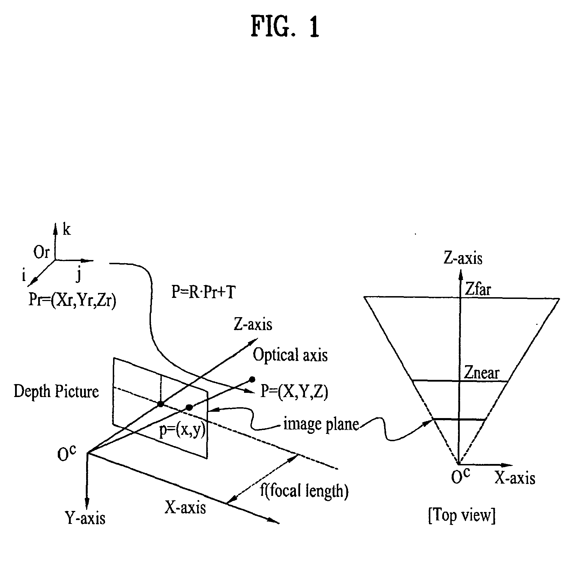

The scheme of compression-coding video signal data considers spatial redundancy, temporal redundancy, scalable redundancy and inter-view existing redundancy. In coding a depth picture to implement a 3D display using a multi-view video, it is ale to perform compression coding in consideration of the spatial redundancy, the temporal redundancy and the like. This compression coding scheme is applicable to a video sequence including color pictures or a video sequence including a color picture and a depth picture as well as a video sequence including depth pictures. In this case, a depth means a distance between a camera and an object in a 3D space or can mean a disparity difference generated from a view difference in 2D video. And, its details shall be described with reference to FIG. 1 later. In the present specification, such a terminology as a depth information, a depth data, a depth picture, a depth sequence, a depth coding, a depth bitstream, a depth map and the like can be flexibly construed as the information related to the depth in accordance with the above definition of the depth. In the present specification, coding is able to include the concept of encoding and the concept of decoding both and can be flexibly construed in accordance with the technical idea and scope of the present invention.

Regarding a bit sequence configuration of a video signal, a separate layer structure, which is called a network abstraction layer (NAL) between a video coding layer (VCL) handling video coding processing itself and a subordinate system for transmitting and storing coded information, is defined. An output of a coding process is VCL data and is mapped by NAL unit before transmission or storage. Each NAL unit contains compressed video data or RBSP (raw byte sequence payload, i.e., result data of video compression) that is data corresponding to header information.

NAL unit basically consists of two parts including NAL header and RBSP. In the NAL header, a flag information (nal_ref_idc) indicating whether a slice, which becomes a reference picture of the NAL unit, is included and an identifier (nal_unit_type) indicating a type of the NAL unit are included. Data of the compressed original copy is stored in the RBSP and RBSP trailing bit is added to a tail of the RBSP to represent a length of the RBSP as a multiple of 8 bits. Types of the NAL unit include IDR (Instantaneous Decoding Refresh) picture, SPS (Sequence Parameter Set), PPS (Picture Parameter Set), SEI (Supplemental Enhancement Information) and the like.

In the standard, as a target product is limited by various profiles and levels to enable implementation of the target product with a moderate cost, a decoder should meet a determined limitation at a corresponding profile and level. In order to indicate a function or parameter for representing a compressed video range the decoder is able to cope with, two kinds of concepts, i.e., a profile and a level are defined. Using a profile identifier (profile_idc), it is able to identify that a bitstream is based on which profile. In this case, a profile identifier means a flag indicating a profile on which a bitstream is based. For instance, in H.264/AVC, if a profile identifier is set to 66, it means that a bitstream is based on a baseline profile. If a profile identifier is set to 77, it means that a bitstream is based on a main profile. If a profile identifier is set to 88, it means that a bitstream is based on an extension profile. And, the profile identifier can be contained in a sequence parameter set.

In order to handle a video sequence (hereinafter named a depth sequence) including a depth picture, it is necessary to identify whether an inputted bitstream relates to a profile of a depth sequence. If the inputted bitstream is identified as the profile of the depth sequence, it is necessary to add a syntax to transmit at least one supplementary information related to the depth coding. In this case, the profile of the depth sequence, which is a supplementary technique of H.264/AVC, is able to indicate a profile mode for handling a depth picture or a profile mode relating to a multiview video containing a depth picture. As the depth coding is a scheme supplementary to the conventional AVC scheme, it may be more efficient to add a syntax as supplementary information on a case of a depth coding mode rather than an unconditional syntax. For instance, when a profile identifier of AVC indicates a profile of a depth sequence, if information on depth coding is added, coding efficiency can be raised.

Sequence parameter means header information containing such information across coding of a whole sequence as a profile, a level and the like. Since a whole compressed video, i.e., a sequence should start with a sequence header, a sequence parameter set corresponding to header information should arrive at a decoder earlier than data that will refer to the corresponding sequence parameter set. Hence, the sequence parameter set RBSP plays a role as header information on result data of video compression. Once a bitstream is inputted, first of all, a profile identifier identifies that the inputted bitstream is based on which one of a plurality of profiles. Hence, by adding a part (e.g., "If (profile_idc == DEPTH PROFILE)") for determining whether the inputted bitstream relates to a profile of a depth sequence to a syntax, it is determined whether the inputted bitstream relates to the profile of the depth profile. Only if it is recognized that the inputted bitstream relates to the profile of the depth sequence, it is able to add various kinds of attribute informations. For instance, it is able to add the number of total views of a depth sequence, the number of depth-view reference pictures, a view identification number of a depth-view reference picture and the like. Moreover, in order to generate and manage a reference picture list, a decoded picture buffer is able to use informations on the depth-view reference picture.

FIG. 1 is a diagram for explaining a concept of a depth according to an embodiment of the present invention.

As mentioned in the foregoing description, a depth can mean a distance from a camera to an object in-between and is able to correspond to a disparity difference value due to a view difference in a video sequence taken via a plurality of cameras. Therefore, a depth in the present specification is applicable to a case of corresponding to a real distance between a camera and an object in a 3D space or a case of corresponding to a disparity difference value in a 2D plane. Referring to FIG. 1, a position Oc of a camera indicates an origin of a 3D camera coordinate system, Z-axis (i.e., optical axis) lies on a straight line in an eye-viewing direction. A random point P (= (X, Y, Z)) in the camera coordinate system can be projected on a random point p (= (x, y)) on a 2D image plane vertical to Z-axis. In this case, the p (= (x, y)) on the 2D image plane can be represented as a color value of the P (= (X, Y, Z)) in the 3D coordinate system and the corresponding 2D image plane can mean a color picture. Moreover, the p (= (x, y)) on the 2D image plane can be represented as a value z of the P (= (X, Y, Z)) in the 3D coordinate system and the corresponding 2D image plane can mean a depth picture. In this case, a focal length f can mean a distance between the position of the camera and the image plane.

Although the P (= (X, Y, Z)) in the 3D coordinate system indicates a random point of the camera coordinate system, if a photographing is performed using a plurality of cameras, a reference coordinate system common to a plurality of the cameras may be needed. In FIG. 1, if a random point of a reference coordinate system, which has a reference set to a point Ow, is set to Pw (= (Xw, Yw, Zw)), the Pw (= (Xw, Yw, Zw)) can be converted to a random point P (= (X, Y, Z)) of the camera coordinate system using 3x3 rotation matrix R and 3x1 translation vector. The P can be obtained by Formula 1.

$$[\text{Formula 1}]$$
$$P = R * Pw + T$$

Based on the above description, the depth picture or the depth map is redefined as follows. First of all, the depth picture or the depth map can be called a set of information resulting from converting a distance between a position of a camera and an object into a relative value with reference to the position of the camera and can be represented by one of a picture unit, a slice unit and the like. And, the depth information in the depth picture or the depth map can be represented by a pixel unit.

Each pixel value of the depth picture can be represented as a Z-coordinate value of the coordinates P (= (X, Y, Z)) corresponding to the camera coordinate system. Since the Z-coordinate value belongs to a real number range, it is necessary to quantize the Z-coordinate value into a value belonging to an integer range to be represented in a digital image format. Each pixel value of the depth picture can be quantized by Formula 2 or Formula 3.

$$[\text{Formula 2}]$$
$$Zq = \text{floor} (255 * (Z - Znear)/(Zfar - Znear) + 0.5)$$

$$[\text{Formula 3}]$$
$$Zq = \text{floor} (255 * (1/Z - 1/Zfar)/(1/Znear - 1/Zfar) + 0.5)$$

In Formula 2 or Formula 3, Zq means a quantized depth information. Referring to [Top View] shown in FIG. 1, Znear means the lower limit of the Z-coordinate value and Zfar means the upper limit of the Z-coordinate value. According to Formula 2 or Formula 3, the quantized depth information can have an integer value in a range of 0 ~ 255.

Thus, the depth picture or the depth map can be coded together with a video sequence of color picture or can be coed with a separate sequence. In this case, various embodiments are applicable for the compatibility with a conventional codec. For instance, a depth coding scheme is applicable as a supplementary scheme to be compatible with H.264 codec. For another instance, a depth coding scheme is applicable as an extension scheme in H.264/AVC multiview video coding. For another instance, a depth coding scheme is applicable as an extension scheme in H.264/AVC scalable video coding. For further instance, a depth coding scheme is applicable as a separate codec scheme of coding a video sequence containing a depth picture only. In the following description, detailed embodiments of depth coding are explained. And, the detailed embodiments of depth coding can be utilized for various cases as mentioned in the foregoing description.

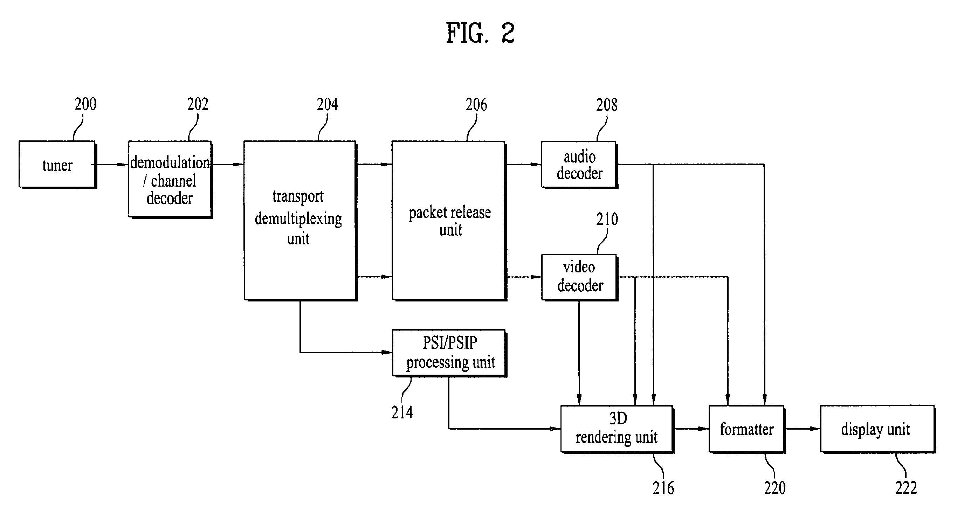

FIG. 2 is an internal block diagram of a broadcast receiver, to which depth coding is applied, according to an embodiment of the present invention.

A broadcast receiver according to the present embodiment receives a terrestrial broadcast signal and then plays a corresponding video. The broadcast receiver is able to generate a 3D content using the received depth related informations. The broadcast receiver includes a tuner 200, a demodulation/channel decoder 202, a transport demultiplexing unit 204, a packet release unit 206, an audio decoder 208, a video decoder 210, a PSI/PSIP processing unit 214, a 3D rendering unit 216, a formatter 220 and a display unit 222.

The tuner 200 selects a broadcast signal of a prescribed user-selected channel from a plurality of broadcast signals inputted via an antenna (not shown in the drawing) and then outputs the selected broadcast signal. The demodulation/channel decoder 202 demodulates the broadcast signal from the tuner 200 and then outputs a transport stream S) by performing error correction decoding on the demodulated signal. The transport demultiplexing unit 204 demultiplexes the transport stream into a video PES (Packeted Elementary Stream) and an audio PES (Packeted Elementary Stream) and then extracts PSI/PSIP (Program Specific Information/Program and System Information Protocol) information. The packet release unit 206 recovers a video ES and an audio ES by clearing packets for the video PES and the audio PES. The audio decoder 208 outputs an audio bitstream by decoding the audio ES. The audio bitstream is converted to an analog audio signal by a digital-to-analog converter (not shown in the drawing), is amplified by an amplifier (not shown in the drawing), and is then outputted via a speaker (not shown in the drawing). The video decoder 210 recovers an original video by decoding the video ES. The decoding process by the audio decoder 208 and the video decoder 210 can be executed on the basis of a packet ID (PID) confirmed by the PSI/PSIP processing unit 214. In the decoding process, the video decoder 210 is able to extract depth information. And, the video decoder 210 extracts such supplementary information required for generating a video of a virtual camera view as camera information, information (e.g., geometrical information such as an object contour line and the like, object transparency information, color information, etc.) for estimating an occlusion (i.e., an unseen part blocked by an object in front) and the like and is then able to provide the extracted supplementary information to the 3D rendering unit 216. Yet, according to another embodiment of the present invention, the depth information and/or the supplementary information can be separated by the transport demultiplexing unit 204.

The PSI/PSIP processing unit 214 receives the PSI/PSIP information from the transport demultiplexing unit 204, parses the received information, and then stores the parsed information in a memory (not shown in the drawing) or a register, thereby enabling a broadcast to be played based on the stored information. The 3D rendering unit 216 is able to generate depth information at a position of a virtual camera using the recovered video, depth information, supplementary information and camera parameter. And, the 3D rendering unit 216 generates the video at the virtual camera position by performing 3D warping based on the recovered video and the depth information at the virtual camera position. According to the present embodiment, the 3D rendering unit 216 is configured as a block separate from the video decoder 210, which is just exemplary. Alternatively, the 3D rendering unit 216 can be configured in a manner of being included in the video decoder 210.

The formatter 220 formats the video recovered in the decoding process, i.e., the video taken via a real camera and the video generated by the 3D rendering unit 216 in accordance with a display system of the corresponding receiver and then enables a 3D video to be displayed via the display unit 222. In this case, the synthesis of the depth information and video at the virtual camera position by the 3D rendering unit 216 or the video formatting by the formatter 220 can be selectively performed in response to a user's command. In particular, a viewer is able to control a synthetic video not to be displayed or is able to designate a view, in which a video synthesis will be performed, by manipulating a remote controller (not shown in the drawing).

As mentioned in the above description, although the depth information is used by the 3D rendering unit 216 to create the 3D video, it can be used by the video decoder 210 according to another embodiment. In the following description, various embodiments for the video decoder 210 to use the depth information are explained.

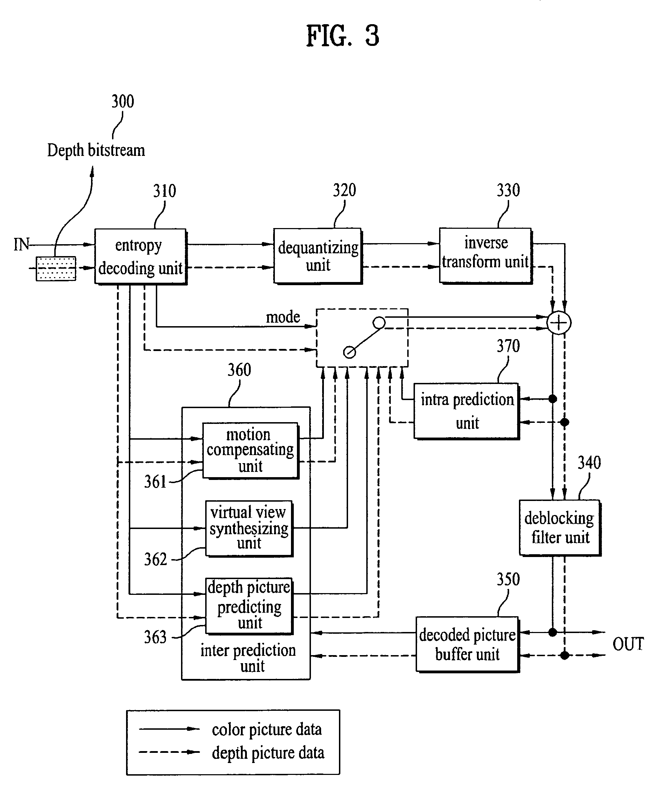

FIG. 3 is a schematic block diagram of a video decoder capable of processing depth information according to an embodiment of the present invention.

Referring to FIG. 3, the video decoder 210 mainly includes an entropy decoding unit 310, a dequantizing unit 320, an inverse transform unit 330, a deblocking filter unit 340, a decoded picture buffer unit 350, an inter prediction unit 360 and an intra prediction unit 370. In this case, a solid line indicates a flow of color picture data and a dotted line indicates a flow of depth picture data. Thus, the color picture data and the depth picture data are shown by being distinguished from each other in FIG. 3. This may mean separate bitstreams or can be regarded as distinguishes data flows in one bitstream. In particular, the color picture data and the depth picture data can be transported as a single bitstream or separate bitstreams and just represent data flows in FIG. 3. The color picture data and the depth picture data are non-limited by being processed in a single decoder.

First of all, parsing is performed by NAL unit to decode a received depth bitstream 300. Generally, before a slide header and slide data are decoded, at least one sequence parameter set and picture parameter set are transmitted to the decoder. In this case, various kinds of attribute informations related to a depth can be contained in a NAL header region, an extension region of a NAL header, a sequence header region (e.g., a sequence parameter set), an extension region of a sequence header, a picture header region (e.g., picture parameter set), an extension region of a picture header, a slide header region, an extension region of a slice header, a slice data region or a macroblock region.

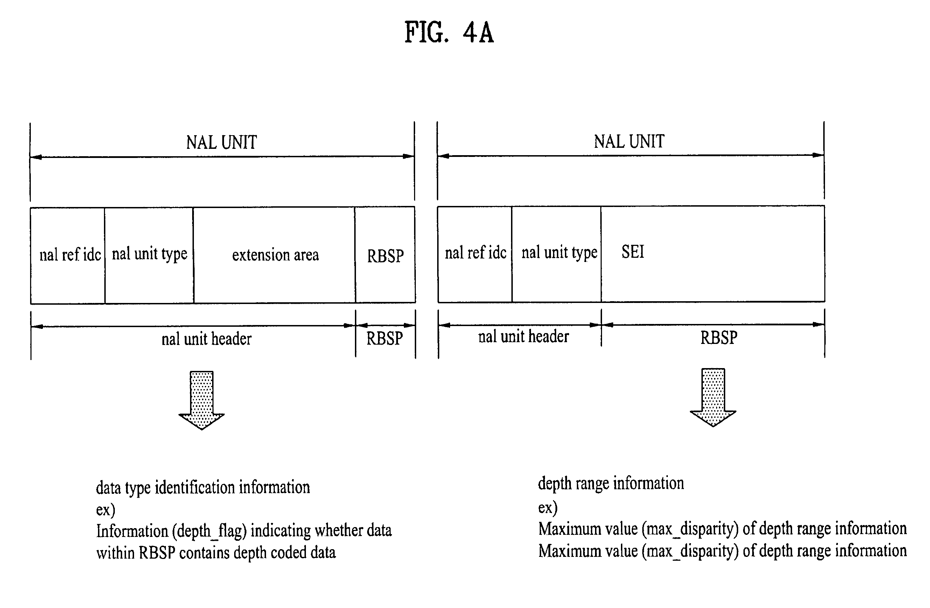

Depth coding is available using a separate codec. If depth coding is compatible with a previous codec, it may be more efficient to add various kinds of attribute informations related to a depth only in case of a depth bitstream. For instance, a depth identification information for identifying a presence or non-presence of a depth bitstream can be added to the sequence header region (or sequence parameter set) or the extension region of the sequence header. In accordance with the depth identification information, only if an inputted bitstream is a depth coded bitstream, it is able to add attribute informations on a depth sequence. For instance, the attribute informations can include a data type identification information, a depth-view identification information and the like, which will be described in detail with reference to FIG. 4A later.

The parsed depth bitstream 300 is entropy decoded via the entropy decoding unit 310 and a coefficient of each macroblock, a corresponding motion vector and the like are then extracted. The dequantizing unit 320 acquires a coefficient value transformed by multiplying a received quantized value by a predetermined constant. And, the inverse transform unit 330 recovers a pixel value by inverse transforming the coefficient value. Using the recovered pixel value, the intra prediction unit 370 performs intra picture prediction from a decoded sample within a current depth picture. Meanwhile, the deblocking unit 340 applies deblocking filtering on each coded macroblock to reduce block distortion. A filter is able to enhance a quality of a decoded frame by smoothening an edge of a block. A selection of a filtering process depends on a boundary strength and a gradient of a picture sample in the vicinity of a boundary. The filtered depth pictures are outputted or saved in the decoded picture buffer unit 350 to be used as reference pictures.

The decoded picture buffer unit 350 plays a role in storing or releasing previously coded depth pictures to perform inter picture prediction. In doing so, in order to store or release the pictures in the decoded picture buffer unit, frame_num and POC (picture order count) of each picture is used. Therefore, since depth pictures in a view different from a current depth picture exist among the previously coded pictures in depth coding, depth view information for identifying a view of a depth picture can be used as well as the frame_num and the POC to utilize those pictures as reference pictures.

The decoded picture buffer unit 350 is able to use information on a depth view to generate a reference picture list for inter-view prediction of depth picture. For instance, it is able to use a depth-view reference information. In this case, the depth-view reference information means the information used to indicate inter-view dependency of depth pictures. For instance, the depth-view reference information can include one of the number of total depth views, a depth view identification number, the number of depth-view reference pictures, a depth view identification number of a depth-view reference picture and the like.

The decoded picture buffer unit 350 manages reference pictures to realize inter picture prediction more smoothly. For instance, an adaptive memory management control operation method and a sliding window method are available. This is to integrate a memory of reference pictures and a memory of non-reference pictures into a single memory to efficiently manage those pictures using a smaller memory. In depth coding, separate indications can be marked on depth pictures to be distinguished from color pictures in the decoded picture buffer unit. And, information for identifying each of the depth pictures is usable for the marking process. The reference pictures managed by this process are usable for the depth coding in the inter prediction unit 360 as well.

Referring to FIG. 3, the inter prediction unit 360 can include a motion compensating unit 361, a virtual view synthesizing unit 362 and a depth picture predicting unit 363.

The motion compensating unit 361 compensates for a motion of a current block using the informations received from the entropy decoding unit 310. The motion compensating unit 361 extracts motion vectors of blocks neighbor to the current block and then acquires a motion vector prediction value of the current block. The motion compensating unit 361 compensates for the motion of the current block using the acquired motion vector prediction value and a differential vector extracted from the video signal. This motion compensation can be performed using a single reference picture or a plurality of pictures. In depth coding, if a current depth picture refers to a depth picture in a different view, it is able to perform the motion compensation using the information on the reference picture list for the inter view prediction of the depth pictures stored in the decoded picture buffer unit 350. And, it is also able to perform the motion compensation using a depth view information for identifying a view of the corresponding depth picture.

The virtual view synthesizing unit 362 synthesizes a color picture in a new view using a picture in a view neighbor to a view of a current picture. In this case, the synthesized color picture in the new view is usable to predict the current picture. In order to use pictures in neighbor views or pictures in a specific view, it is able to use view identification information indicating a view of a picture. If this new view is generated, it is necessary to define a flag information indicating whether to generate the new view or not. If the flag information indicates that the new view will be generated, it is able to generate the new view using the view identification information. The pictures in the new views acquired via the virtual view synthesizing unit 362 are usable as reference pictures. In this case, the view identification information can be assigned to the pictures in the new view. Moreover, in a process for performing a motion vector prediction to transmit the motion vector, neighbor blocks of the current block are able to refer to the picture acquired via the virtual view synthesizing unit 362. In this case, in order to use the picture in the new view as a reference picture, it is able to use a view identification information indicating a view of a picture.

According to another embodiment, the virtual view synthesizing unit 362 is able to synthesize a depth picture in a new view using a depth picture in a view neighbor to a view of a current depth picture. In this case, the synthesized depth picture in the new view is usable to predict the current depth picture. In order to indicate a view of a depth picture, it is able to use a depth view identification information. In this case, the depth view identification information can be induced from a view identification information of a corresponding color picture. For instance, the corresponding color picture can have the same picture output order information of the current depth picture and the same view identification information of the current depth picture.

According to a further embodiment, the virtual view synthesizing unit 362 is able to synthesize a color picture in a new view using a depth picture in a view neighbor to that of a current depth picture. Alternatively, the virtual view synthesizing unit 362 is able to synthesize a depth picture in a new view using a color picture in a view neighbor to that of a current color picture.

The depth picture predicting unit 363 is able to predict a current depth picture using depth coding information. In this case, the depth coding information is able to mean such information related to depth coding as new macroblock type information for depth coding, boundary line identification information in a depth picture, information indicating whether data in RBSP contains depth coded data and the like.

The inter predicted picture and the intra predicted picture through the above-mentioned process are selected in accordance with a prediction mode to recover a current picture (or a current depth picture).

FIG. 4A shows depth coding information containable in a depth coded bitstream according to an embodiment of the present invention.

FIG. 4A shows one example of a configuration of NAL unit in which attribute informations of a depth coded bitstream can be included. The NAL unit can mainly include a header of the NAL unit and RBSP (raw byte sequence payload, i.e., result data of video compression). And, the header of the NAL unit is able to include an identification information (nal_ref_idc) indicating whether the NAL unit includes a slice of a reference picture and an information (nal_unit_type) indicating a type of the NAL unit. Moreover, the NAL unit is able to include an extension region of the NAL unit header limitedly. For instance, if the information indicating the type of the NAL unit is related to scalable video coding, multiview video coding or depth coding or the information indicates a prefix NAL unit, the NAL unit is able to include the extension region of the NAK unit header. In particular, for example, if the nal_unit_type indicates extension data of a slice layer, extension data of a sequence header, extension data of a subset sequence header or a prefix NAL unit, the NAL unit is able to include the extension region of the NAL unit header. And, in the extension region of the NAL unit header, attribute informations on a depth sequence can be added in accordance with a flag information for identifying a presence or non-presence of a depth coded bitstream.

For another example, if the information indicating the type of the NAL unit is the information indicating a sequence header, the RBSP is able to include the information on a sequence parameter. In this case, the sequence parameter set is able to include an extension region of the sequence parameter set in accordance with a profile information. For instance, if the profile information (profile_idc) is a profile related to the depth coding, the sequence parameter set is able to include he extension region of the sequence parameter set. In accordance with the profile information, the subset sequence parameter set is able to include the extension region of the sequence parameter set. And, the extension region of the sequence parameter set is able to include depth-view reference information indicating an inter-view dependency of the depth picture.

Various kinds of attribute informations on a depth sequence, e.g., attribute information inclusive in an extension region of a NAL unit header or attribute informations inclusive in an extension region of a sequence parameter set are described in detail as follows.

First of all, data type identification information means information for identifying a type of data included in RBSP of NAL unit. For instance, it is able to define an information (depth_flag) indicating whether data in RBSP includes depth coded data. This information can be defined in least one of an extension region of a NAL unit header, a sequence parameter set, an extension region of a sequence parameter set, a slice layer region, an extension region of a slice layer, a slice header, an extension region of a slice header, a macroblock layer and a region indicating a multi-view video signal thereof.

Depth-view reference information is able to mean information indicating inter-view dependency of depth pictures. Namely, the depth-view reference information is the information indicating what kind of structure is used to predict depth pictures. The depth-view reference information can be acquired from a data region of a video signal. For instance, the depth-view reference information can b acquired from a sequence parameter set region or an extension region of a sequence parameter set. And, it is able to recognize the depth-view reference information using the number of reference pictures and view information of the reference picture. For instance, the number of total views of depth pictures is acquired and depth view identification information for identifying a view of each of the depth pictures can be then acquired based on the number of the total views. It is able to acquire information on the number of depth-view reference pictures, which indicates the number of reference pictures for a reference direction of each view. In accordance with the number information of the depth-view reference pictures, vie identification information of each of the depth-view reference pictures can be acquired.

Through the above method, the depth-view reference information can be acquired. In particular, the depth-view reference information can be recognized in a manner of being divided into a case of an anchor picture and a case of a non-anchor picture. This can be obtained using an anchor picture identification information indicating whether a coded slice in a current NAL is an anchor picture. This anchor picture identification information can be acquired from an extension region of a NAL header. Moreover, the depth-view reference information acquired in accordance with the anchor picture identification information can be used for generation and management of the reference picture list and the like.

Depth range information indicates the information indicating a range of a disparity difference between pictures in neighbor views. The depth range information can be represented as a maximum value and a minimum value. For instance, max_disparity indicates a maximum value of the disparity information between corresponding positions of two pictures in different views taken at the same time. And, min_disparity indicates a minimum value of the disparity information between corresponding positions of two pictures in different views taken at the same time.

For instance, the depth range information can be calculated into a x-coordinate value (or y- or z-axis coordinate value) difference from a corresponding point of a right picture with reference to a position of a corresponding point in a left picture. The depth range information can be represented by 1-pixel unit or sub-pixel unit. For instance, a negative depth range information is able to provide a 3D effect that a picture is projected from a screen toward a viewer. Since the depth range information is affected by a distance between cameras for acquiring two pictures, it can be found from a disparity information between two pictures most neighbor to each other. Alternatively, it is able to use depth range information acquired from two randomly selected pictures neighbor to each other. Alternatively, after depth range informations have been acquired from at least one or more neighbor picture pairs, it is able to find a final depth range information using maximum and minimum values in the acquired informations. Alternatively, it is able to acquire a depth range information from a picture pair enabling (N-1) views to exist between two pictures.

The depth range information can be included in SEI (muitiview_scene_info(pay)oadSize)) of a multiview video signal. For instance, the depth range information can be included as a multiview scene information SEI message in a multiview video signal. Alternatively, the depth range information can be included in a separate SEI (depth_range_info (pay)oadSize)) region for transmitting the depth range information.

If the maximum and minimum values of the depth range information are transmitted, they can be usefully used for another post-processing. For instance, a depth change in a single scene is smooth in general. Yet, in case of an interval between scenes, a viewer may sense a considerable depth difference between a last frame of a previous scene and a first frame of a next scene. The considerable depth difference can be generated between a short-range view and a distant view. The considerable depth difference can be generated if an object suddenly appears on a screen or disappears from the screen. An abrupt depth difference can be generated not only in a single program but also between a program and an advertisement. And, the abrupt depth difference can be generated in case of a channel change. In this case, since the abrupt change of convergence causes a visual fatigue to a viewer and prevents the user from concentrating on a content, it is necessary for a display side to perform post-processing to prevent the abrupt depth change. Therefore, by acquiring depth range information by a frame unit, it is able to adjust a depth change between two different scenes or channels. In doing so, most recent values are allocated to each frame. When there is a change of the depth range information between two neighbor frames, it is able to determine whether to perform the post-processing through comparison.

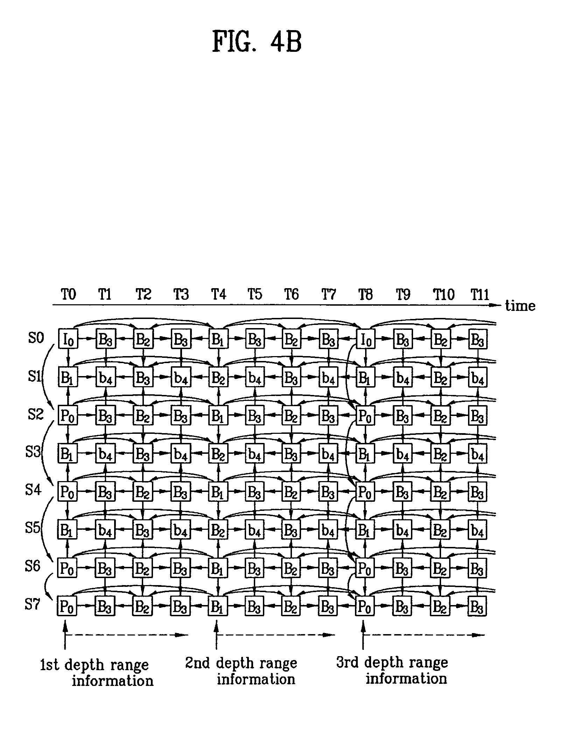

Meanwhile, when a stereoscopic image is displayed by extracting a 2-view video signal from a multi-view signal only, the two views may be adjacent to each other or may not. In case that the two views are not adjacent to each other, the depth range information should be calculated in proportion to a distance between the two views. For instance, in FIG. 4B, when a view S0 and a view S2 are displayed, the depth range information should be scaled at a rate in consideration of a distance between the view S0 and the view S1 and a distance between the view S1 and the view S2.

FIG. 4B shows a structure of multi-view video coding, to which SEI message information containing depth ranging information applies, according to an embodiment of the present invention.

FIG. 4B shows a predicted structure relation between frames in accordance with a view and time of a multiview video signal configured in 8 views. In this case, SEI message information containing a depth range information can be applied from a picture of an access unit, to which a current frame belongs, up to a picture of an access unit until reception of a next SEI message information. For instance, referring to FIG. 4B, a first depth range information can be applied to all pictures existing in time slots T0 to T3, a second depth range information can be applied to all pictures existing in time slots T4 to T7, and a third depth range information can be applied to all pictures existing in time slots T8 to T11. Alternatively, SEI message information including depth range information can be applied to pictures in the same time slot only.

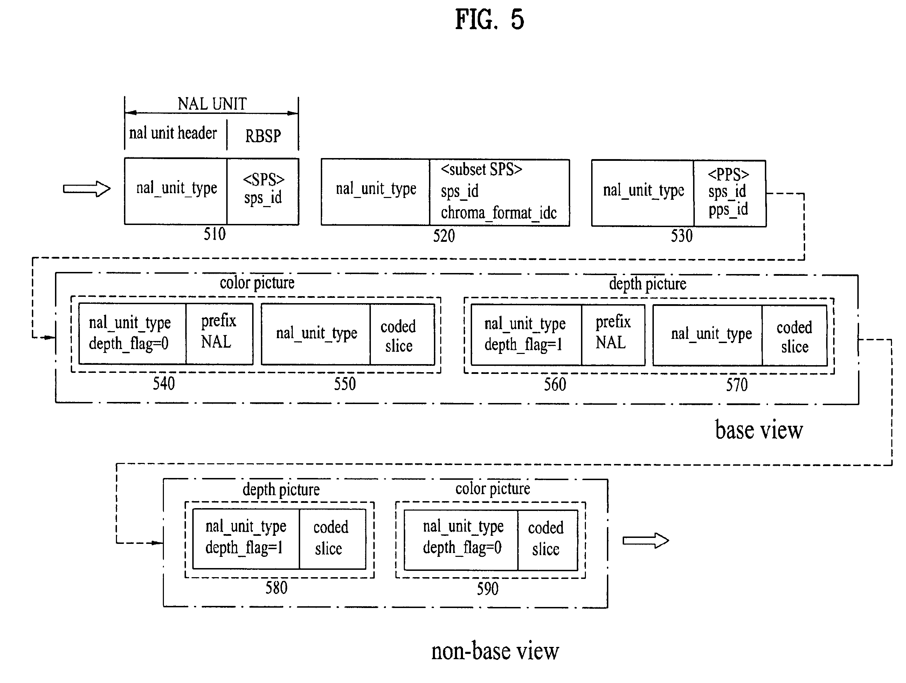

FIG. 5 is a diagram for explaining a depth coded bitstream structure and a depth coded bitstream transmitting method according to an embodiment of the present invention.

Since a whole compressed video, i.e., a sequence should start with a sequence header, a sequence parameter set corresponding to header information should arrive at a decoder earlier than data that will refer to the corresponding sequence parameter set. Likewise, a picture parameter set corresponding to header information of a picture should arrive at the decoder earlier than data that will refer to the corresponding picture parameter set. For instance, a sequence identification number (sps_id) 510 or 520 for identifying each sequence parameter set exists in the corresponding sequence parameter set. And, a picture identification number (pps_id) 530 for identifying each picture parameter set and a sequence identification number (sps_id) 530 indicating which sequence parameter will be referred to exist in the corresponding picture parameter set. Likewise, a picture identification number (pps_id) indicating which picture parameter set will be referred to exists in a slice.

Slice data can be transmitted in continuation with the picture parameter set. In this case in case of a video sequence acquired from a plurality of cameras, data for a base view can be transmitted earlier than that for a non-base view. This is because the data for the base view is used as a reference view of the data for the non-reference view. In this case, the base view means the view in which an independent bitstream can be formed by coding according to a general video coding scheme (e.g., MPEG-2, MPEG-4, H.263, H.264, H.264/AVC, etc.). The base view is also able to mean the view in which coding can be independently performed without using information of a different view. Alternatively, the base view is able to mean a view compatible with a general video coding scheme. The non-base view means the view that is not the base view. The non-base view is able to mean the view in which coding can be performed using information of a different view.

When a random picture in the base view or the non-base view is transmitted, color picture data and depth picture data can be transmitted in a manner of being separated into separate NAL units, respectively. In case of the base view, the color picture data 540 and 550 can be transmitted ahead of the depth picture data 560 and 570. In case of the non-base view, the depth picture data 580 can be transmitted ahead of the color picture data 590. This corresponds to one embodiment of the present invention. According to another embodiment, color picture data can be transmitted ahead of depth picture data irrespective of the base view or the non-base view.

In this case, each of the NAL units including the color picture data or the depth picture data is able to include a depth flag information (depth_flag) indicating whether data within the NAL unit in a corresponding NAL header region includes depth coded data. For instance, if the depth_flag is set to 0, the data within the RBSP does not include the depth coded data, i.e., the data within the RBSP includes the color picture data. If the depth_flag is set to 1, the data within the RBSP includes the depth coded data. Yet, if a type of the NAL unit indicates a prefix NAL, any information is not included within the RBSP of the corresponding NAL unit (540, 560) but the coded slide data is included in the RBSP of the NAL unit transmitted right next to the former NAL unit (550, 570).

View information of a first NAL unit of a current access unit is smaller than that of a last NAL unit of a previous access unit. In this case, the view information means a view identification information of NAL unit or is able to mean a parameter induced from the view identification information of the NAL unit. In this case, the parameter induced from the view identification information of the NAL unit can include the information indicating an inter view decoding order. Moreover, the NAL unit is able to mean a NAL unit of a picture which is not redundantly coded. Namely, the NAL unit is able to mean a NAL unit of a primary coded picture.

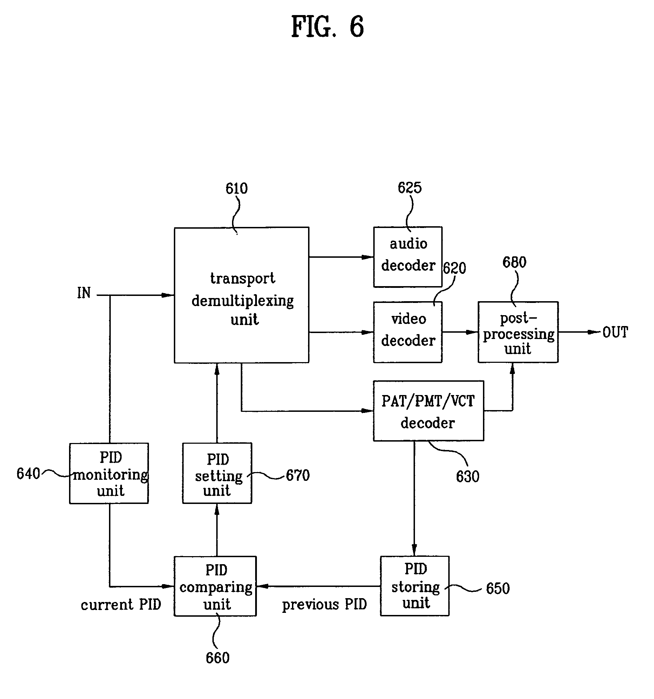

FIG. 6 is a schematic block diagram of a channel switching device of a digital TV using depth information according to an embodiment of the present invention.

A channel switching device of the digital TV is able to include a transport demultiplexing unit 610, a video decoder 620, an audio decoder 625, a PAT/PMT/VCT decoder 630, a PID monitoring unit 640, a PID storing unit 650, a PID comparing unit 660, a PID setting unit 670, and a post-processing unit 680.

The channel switching device of the digital TV, as shown in FIG. 6, is able to include the transport demultiplexing unit 610 extracting one of a plurality transport streams having program information and demultiplexing the extracted stream into A/V (audio/video) PES (packeted elementary stream) and PSI (program specific information), the video decoder 620 decoding the A/V PES of the transport demultiplexing unit 610 into a video signal and outputting the video signal to a video output device (not shown in the drawing), the audio decoder 625 decoding the A/V PES of the transport demultiplexing unit 610 into an audio signal and outputting the audio signal to an audio output device (not shown in the drawing), the PAT/PMT/VCT decoder 630 decoding the PSI of the transport demultiplexing unit 610 into a PAT (program association table), a PMT (program map table) and a VCT (virtual channel table), the PID storing unit 650 storing the PID (program identification) information outputted from the PAT/PMT/VCT decoder 630 and then outputting the stored PID information as a previous PID information in case of a channel switching, the PID monitoring unit 640 collecting the PID information by monitoring the transport stream in case of the channel switching and outputting the collected result as a current PID information, the PID comparing unit 660 comparing the current PID information collected by the PID monitoring unit 640 in case of the channel switching with the previous PID information stored in the PID storing unit 650, the PID setting unit 670 setting the PID information to enable the transport demultiplexing unit 610 to extract the A/V PES in accordance with the comparison result of the PID comparing unit 660, and the post-processing unit 680 processing a depth change using depth information acquired from the video decoder 620.

In a general digital TV, a broadcast signal, which is inputted via an antenna, is selected and detected by a tuner (not shown in the drawing) in accordance with a user's selection, is demodulated via a VSB demodulating unit (not shown in the drawing), and is then outputted as a transport stream of MPEG-2 standard. The transport demultiplexing unit 610 separates the transport stream into A/V PES (audio/video packeted elementary stream) and PSI (program specific information) which is supplementary service data. The audio decoder 620 and the video decoder 620 decode the A/V PES into an original audio signal and an original video signal and then output the audio signal and the video signal to the audio/video output devices (not shown in the drawing) externally. The PAT/PMT/VCT decoder 630 provides overall information on programs by decoding the PSI of the transport demultiplexing unit 610 into the PAT (program association table), the PMT (program map table) and the VCT (virtual channel table).

Meanwhile, if a user inputs a key for a broadcast channel switching, a central processing unit (not shown in the drawing) controls a tuned frequency of a tuner (not shown in the drawing) to select a station. In doing so, the central processing unit (not shown in the drawing) determines the total channel number in accordance with a user's selection, a currently watched program number and the like by searching the program association table (PAT) outputted from the PAT/PMT/VCT decoder 630. Subsequently, the central processing unit (not shown in the drawing) recognizes a PID corresponding to the A/V PES by searching the PAT (program map table) corresponding to a user-specific broadcast program, controls the transport demultiplexing unit 610 in accordance with the recognized PID to extract the corresponding A/V PES, and then outputs the extracted A/V PES to the audio decoder 625 and the video decoder 620, thereby enabling the user-selected broadcast program to be displayed. In doing so, the PID storing unit 650 stores the PID (packet ID) information outputted from the PAT/PMT/VCT decoder 630 and then outputs the stored PID information as a previous PID information in case of a channel switching. The PID monitoring unit 640 collects the PID information by monitoring the transport stream inputted in case of the channel switching and then outputs the collected result as a current PID information.

If so, the PID comparing unit 660 compares the current PID information collected by the PID monitoring unit 640 with the previous PID information stored in the PID storing unit 650. The PID setting unit 670 then sets the PID information to enable the transport demultiplexing unit 610 to extract the A/V PES in accordance with the comparison result. Hence, if the previous PID information matches the current PID information, it is able to save the time consumed for the acquisition and demultiplexing of the PSIP (program and system information protocol) in case of the channel switching.

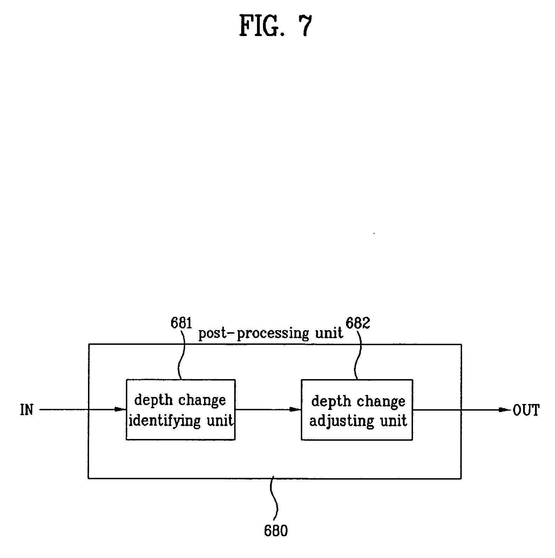

In the above-described channel switching process, the post-processing unit 680 is able to adjust a depth change using the depth information acquired from the video decoder 620. For instance, the post-processing unit 680 stores previous values of the depth range information and is able to adjust the depth change for a current frame using threshold information on a pre-designated depth change and the like. This is explained in detail with reference to FIGs. 7 to 9 as follows.

FIG. 7 is a schematic block diagram of a post-processing unit 680 for adjusting a depth change according to an embodiment of the present invention.

The post-processing unit 680 is able to include a depth change identifying unit 681 and a depth change adjusting unit 682.

First of all, the depth change identifying unit 681 is able to identify an extent of a depth change from depth range information of a previous frame and range information of a current frame.

In accordance with the depth change extent, the depth change adjusting unit 682 is able to perform adjustment to ease the depth change.

It is able to use a pixel shift as one embodiment for canceling out an abrupt change of a depth. In particular, a convergence change can be made to progress gradually using the pixel shift. For instance, when a user is provided with a far view due to a high depth value of a previous scene or channel, if the previous scene or channel is switched to a next scene or channel, the user may be provided with a near view. In this case, a shift can be performed on an initial frame having a depth change occur therein in a manner of shifting a left video signal component to the left by 3 pixels and shifting a right video signal component to the right by 3 pixels. Subsequently, the shift is performed on the next frame in a manner of shifting by 2 pixels each. As the frames proceed, the shift can be consecutively performed by decrementing the shifted pixel number until 0. Alternatively, the shift can be performed in a manner of gradually proceeding by a plurality of frame units. Alternatively, it is able to apply the shift by the same pixel number to similar scenes. According to another method, it is able to finely adjust the pixel number per frame adaptively. For this, such a method as AGC (adaptive gain control), DRC (dynamic range control) and the like, which is an algorithm applied for audio signal volume control, is applicable.

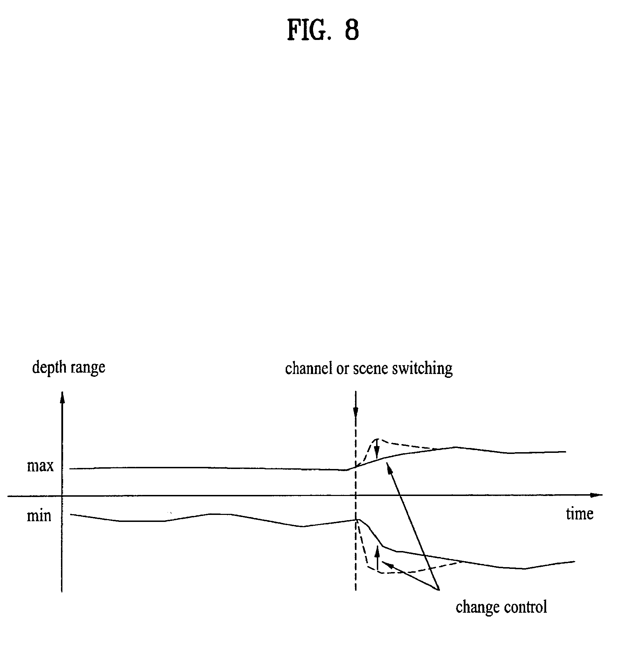

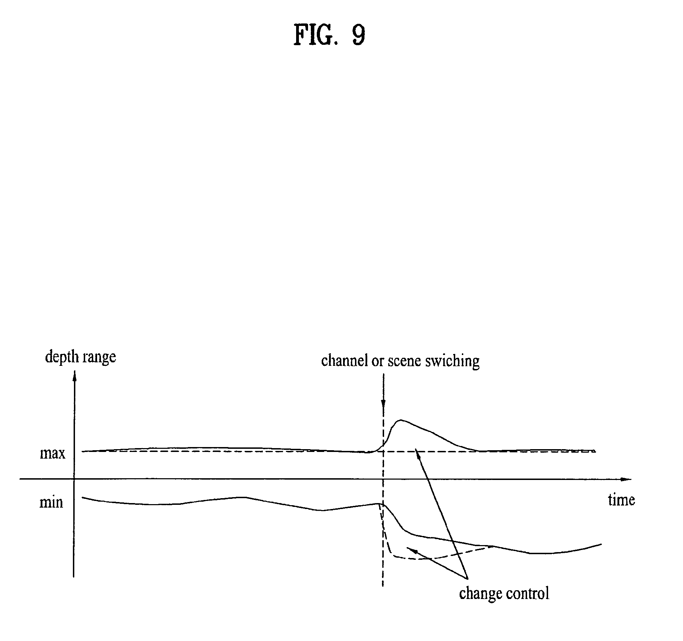

FIG. 8 shows an example of adjusting a depth change using a pixel shift of left and right video signals according to an embodiment of the present invention. And, FIG. 9 shows an example of adjusting a depth change using a pixel shift of left and right video signals according to an embodiment of the present invention.

Looking into a dotted part shown in FIG. 8 or FIG. 9, it can be observed that a depth change abruptly occurs in case of a channel or scene change. In this case, it is able to adjust the depth change to change gradually by changing the depth change from a dotted line to a solid line through a convergence control. Through this process, convergence of left and right eyes is prevented from being abruptly changed, whereby visual fatigue of eyes can be reduced.

Besides, if a depth change analysis determines that a depth change is greater than a predetermined threshold, a switching between two scenes or channels is enabled to occur gradually by applying a fade-out fade-in scheme. Alternatively, a mosaic scheme or the like is available as well.

Referring to FIG. 8, in case that a minimum value of depth range information is raised as many as a predetermined multiple, a maximum value of the depth range information is raised as many as the predetermined multiple. In particular, in case of performing a convergence control to reduce an effect of excessive projection toward a viewer, it is necessary to control a background together.

Referring to FIG. 9, it is able to control a width of a picture by multiplying depth values of the picture by a predetermined scaling factor. Since a depth value is convertible to a disparity value, it is able to determine an execution of a control and a control extent by comparing it within a given depth range information. In doing so, a hole can be generated from a view picture that is synthesized by changing the depth value of the picture. And, an interpolation method is applicable to fill up the hole.

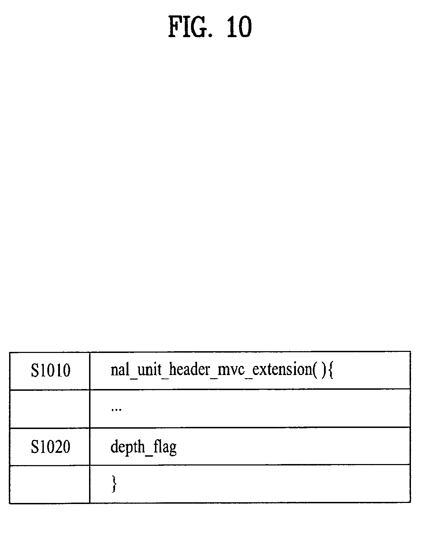

FIG. 10 shows an example of information for identifying a depth sequence according to an embodiment of the present invention.

Information for identifying a depth sequence can be included in an extension region of NAL unit header or an extension region of a sequence parameter set. For example of the information for identifying the depth sequence, there is data type identification information.

The data type identification information can mean the information for identifying a type of data included in RBSP of the NAL unit. For instance, as shown in FIG. 6, it is able to define a depth flag information (depth_flag) indicating whether data within RBSP includes depth coded data [S620]. In this case, the depth flag information (depth_flag) can be included in an extension region of a NAL unit header and the extension region can mean an extension region of a multiview video coded NAL unit header [5610]. Alternatively, the extension region can mean an extension region of a scalable video coded NAL unit header or an extension region of a depth coded NAL unit header.

As mentioned in the foregoing description, a video decoder according to the present invention is provided to a broadcast (e.g., DMB (digital multimedia broadcasting)) transmitting/receiving device, thereby being used to decode a video signal, a data signal and the like. And, the multimedia broadcast transmitting/receiving device can include a mobile communication terminal.

A decoding/encoding method according to the present invention can be implemented into a computer-executable program and can be stored in a computer-readable recording medium. And, multimedia data having a data structure of the present invention can be stored in the computer-readable recording medium. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). And, a bitstream generated by the above mentioned encoding method can be stored in the computer-readable recording medium or can be transmitted via wire/wireless communication network.

## INDUSTRIAL APPLICABILITY

As mentioned in the foregoing description, the detailed descriptions for the preferred embodiments of the present invention are provided to be implemented by those skilled in the art. While the present invention has been described and illustrated herein with reference to the preferred embodiments thereof, it will be apparent to those skilled in the art that various modifications and variations can be made therein without departing from the spirit and scope of the invention.

**Claims**

1. A method of processing a video signal, comprising:

    receiving a multi-view coded bitstream including a color picture and a depth picture, the depth picture representing a set of numeric informations on a distance between an object and a camera serving as a reference;
    acquiring data type identification information as well as depth range information from the multi-view video coded bitstream, the data type identification information indicating whether the multi-view video coded bitstream contains depth coded data, the depth range information representing information of maximum and minimum values of a disparity difference between two pictures in different views;
    according to the data type identification information, if the multi-view video coded bitstream contains the depth coded data, recovering the depth coded data;
    adjusting the depth range information by comparing the depth range information with a predetermined depth change threshold range; and
    displaying a 3D video by using the recovered depth coded data and the adjusted depth range information.

2. The method of claim 1, wherein if the depth range information exceeds the predetermined depth change threshold range, the depth range information is adjusted by being multiplied by a scaling factor to have a value within the depth change threshold range.

3.  The method of claim 2, wherein the depth range information is acquired from a supplementary information area.

4.  The method of claim 1, wherein the data type identification information is acquired from an extension region of a depth coded NAL unit.

5.  The method of claim 1, wherein the multi-view video coded bitstream includes the color picture and the depth picture of a base view and a non-base view, wherein the base view indicates a decodable view independently from other views without using inter view prediction, and wherein the non-base view indicates a view different from the base view.

6.  An apparatus for processing a video signal, comprising:

    a transport demultiplexing unit acquiring data type identification information as well as depth range information from a multi-view video coded bitstream including a color picture and a depth picture, the depth picture representing a set of numeric informations on a distance between an object and a camera serving as a reference, the data type identification information indicating whether the multi-view video coded bitstream contains depth coded data;
    a video decoder recovering the depth picture based on the data type identification information;
    a post-processing unit adjusting the depth range information by comparing the depth range information with a predetermined depth change threshold range; and
    a display unit displaying a 3D video by using the recovered depth coded data and the adjusted depth range information.

7.  The apparatus of claim 6, wherein the data type identification information is acquired from an extension region of a depth coded NAL unit.

8.  The apparatus of claim 6, wherein the multi-view video coded bitstream includes the color picture and the depth picture of a base view and a non-base view, wherein the base view indicates a decodable view independently from other views without using inter view prediction, and wherein the non-base view indicates a view different from the base view.

# FIG. 1

Or
k
i    j
Pr=(Xr,Yr,Zr)

P=R·Pr+T

Z-axis
Optical axis

Depth Picture

P=(X,Y,Z)

p=(x,y)

image plane

$O^c$

f(focal length)

Y-axis    X-axis

Z-axis
Zfar

Znear

$O^c$    X-axis

[Top view]

# FIG. 2

# FIG. 3

# FIG. 4A

| NAL UNIT | | | |
|---|---|---|---|
| nal ref idc | nal unit type | extension area | RBSP |

nal unit header / RBSP

| NAL UNIT | | |
|---|---|---|
| nal ref idc | nal unit type | SEI |

nal unit header / RBSP

data type identification information
ex)
Information (depth_flag) indicating whether data
within RBSP contains depth coded data

depth range information
ex)
Maximum value (max_disparity) of depth range information
Maximum value (max_disparity) of depth range information

EP 2 387 243 A2

# FIG. 4B

# FIG. 5

EP 2 387 243 A2

```
                    NAL UNIT
        ┌─────────────────────────────┐
        │ nal unit header │    RBSP    │
        └─────────────────────────────┘
```

| nal_unit_type | \<SPS\><br>sps_id |
|---|---|

510

| nal_unit_type | \<subset SPS\><br>sps_id<br>chroma_format_idc |
|---|---|

520

| nal_unit_type | \<PPS\><br>sps_id<br>pps_id |
|---|---|

530

**color picture**

| nal_unit_type<br>depth_flag=0 | prefix<br>NAL |
|---|---|

540

| nal_unit_type | coded<br>slice |
|---|---|

550

**depth picture**

| nal_unit_type<br>depth_flag=1 | prefix<br>NAL |
|---|---|

560

| nal_unit_type | coded<br>slice |
|---|---|

570

**base view**

**depth picture**

| nal_unit_type<br>depth_flag=1 | coded<br>slice |
|---|---|

580

**color picture**

| nal_unit_type<br>depth_flag=0 | coded<br>slice |
|---|---|

590

**non-base view**

# FIG. 6

# FIG. 7

681  post-processing unit  682

```
IN ──────▶ depth change        ──▶ depth change      ──────▶ OUT
           identifying unit         adjusting unit
```

680

# FIG. 8

depth range                        channel or scene switching

max

min                                               time

change control

# FIG. 9

# FIG. 10

| S1010 | nal_unit_header_mvc_extension( ){ |
|-------|-----------------------------------|
|       | ...                               |
| S1020 | depth_flag                        |
|       | }                                 |